Europäisches Patentamt

European Patent Office

Office européen des brevets

(11) Publication number: **0 260 000 B1**

## EUROPEAN PATENT SPECIFICATION

(45) Date of publication of patent specification: **29.04.92**    (51) Int. Cl.⁵: **G11B 23/087**

(21) Application number: **87307381.1**

(22) Date of filing: **20.08.87**

(54) **Tape cassette.**

(30) Priority: **11.09.86 JP 139665/86 U**
**11.09.86 JP 139666/86 U**
**24.10.86 JP 163285/86 U**

(43) Date of publication of application:
**16.03.88 Bulletin 88/11**

(45) Publication of the grant of the patent:
**29.04.92 Bulletin 92/18**

(84) Designated Contracting States:
**DE ES FR GB IT NL**

(56) References cited:
**DE-U- 8 505 795**
**US-A- 4 288 827**
**US-A- 4 389 690**

(73) Proprietor: **SONY CORPORATION**
**7-35 Kitashinagawa 6-Chome Shinagawa-ku**
**Tokyo 141(JP)**

(72) Inventor: **Igarashi,, Tadao Patents Division**
**Sony Corporation**
**7-35 Kitashinagawa Shinagawa-ku**
**Tokyo 141(JP)**
Inventor: **Ohgi, Takashi Patents Division Sony**
**Corporation**
**7-35 Kitashinagawa Shinagawa-ku**
**Tokyo 141(JP)**

(74) Representative: **Purvis, William Michael**
**Cameron et al**
**D. Young & Co. 10 Staple Inn**
**London WC1V 7RD(GB)**

EP 0 260 000 B1

## Description

The invention relates generally to a tape cassette and has particular though not exclusive application to a tape cassette for a video tape recorder.

In a previously proposed tape cassette for a video tape recorder detecting apertures with respective obstruction members are provided in a bottom plate of the tape cassette so as to make it possible to retrieve information regarding the tape cassette and the tape therein, such as information on the kind of tape, the thickness of tape and the prevention of erroneous erasion.

Each of the detecting apertures can be either opened or closed by the obstruction member on the basis of predetermined information, and when the tape cassette is mounted in a video tape recorder, such predetermined information is retrieved by detecting pins provided in the video tape recorder in order to detect whether the respective detecting apertures are opened or closed by the obstruction members.

Thus, if the detecting aperture has been closed, the detecting pin abuts against the obstruction member and is pressed against the force of a resilient member, and if the detecting aperture is open, the detecting pin remains in position and engages in the detecting hole, whereby the desired information is retrieved due to the change of the height of the detecting pin.

Accordingly, the detecting aperture must have depth enough to receive the detecting pin and if the obstruction member is moved up and down along the detecting aperture the detecting aperture must also have sufficient depth to receive the stroke of the obstruction member. Thus, the locations of the apertures with the respective obstruction members is limited to places where various components accommodated in the tape cassette, such as a tape, tape reels, tape guides, various mounting pins and so on, are not located. In the prior art, the detecting aperture and the obstruction member are located within a triangular space at the central rear portion of the trapezoidal bottom opening which is provided in the bottom plate, to ensure that the detecting aperture does not interfere with the tape reels.

Utility Model Specification DE-U-8 505 795 discloses a tape cassette with a closable lid and a detecting aperture provided at a rear corner of the cassette and openable and closable by movement of an obstruction member.

Patent Specification US-A-4 389 690 discloses a tape cassette with a locking mechanism for a front lid.

Recently, the amount of information that may be required regarding the tape cassette and the tape therein has increased as tapes of various kinds and thicknesses have been introduced, so that it becomes necessary to provide greater numbers of detecting apertures with respective obstruction members in the bottom plate . However, there is a limitation on suitable locations for apertures as mentioned above.

According to the invention there is provided a tape cassette having an upper half and a lower half and accommodating a pair of reels around which a tape is wound, the tape cassette comprising:

a lid to close a front opening within which the tape extends and;

a lid-locking member pivoted on a mounting pin and to lock the lid;

characterised in that a pedestal is provided on a bottom wall of the cassette, has a raised portion which is at a higher level than the bottom wall and defines a cavity beneath the raised portion;

the mounting pin projects upwardly from the raised portion of the pedestal; and

a detecting aperture is provided in the lower half opening into the cavity beneath the pedestal and an obstruction member is movable within the cavity to provide an indication of information regarding the tape cassette depending on whether or not it obstructs the detecting aperture.

Thus a detecting aperture with a corresponding obstruction member can be provided in the bottom of the tape cassette without giving any undesirable influence to the mounting pin for the lid-locking member, and substantially in alignment with the mounting pin, the bottom space of the tape cassette can be more effectively utilized and the amount of available information regarding the tape cassette can be increased.

The obstruction member for the detecting aperture can be guided in a bore within the mounting pin in order to make the obstruction member move smoothly up and down within the detecting aperture.

The up-and-down movable obstruction member can be provided with positioning means and presser means, in its lower position where the detecting aperture is closed, so that when the tape cassette is mounted in a video tape recorder the detecting pin is reliably pressed down by the obstruction member, so that the information that the detecting aperture has been closed, is always reliably retrieved.

Advantageously a stop is provided projecting from the obstruction member to come into contact with the bottom of a U-shaped notch which is provided in the lower half of the tape cassette, and is prevented from lowering further, so that the obstruction member does not come out of the detecting aperture even if the covering member is forcibly lowered.

The invention is diagrammatically illustrated by way of example in the accompanying drawings, in which

Figure 1 is an exploded, perspective view of part of a tape cassette according to a first embodiment of the invention;

Figure 2A and 2B are sectional views taken on line II-II of Figure 4;

Figures 3A and 3B are sectional views taken on line III-III of Figure 4;

Figure 4 is a plan view of part of the tape cassette;

Figure 5 is an exploded, perspective view of part of a tape cassette according to a second embodiment of the invention;

Figures 6A and 6B are sectional views of part of the tape cassette sectioned in the same position as the one illustrated in Figures 2A and 2B.

Figure 7A is an exploded, perspective view of part of the tape cassette according to a third embodiment of the invention;

Figure 7B is a perspective view of part of the tape cassette shown in Figure 7A;

Figures 8A and 8B are sectional views of part of the tape cassette sectioned in the same position as the one illustrated in Figures 2A and 2B;

Figure 9 is a plan view of the tape cassette without the upper half thereof accordng to the embodiments; and

Figure 10 is a side view of the tape cassette.

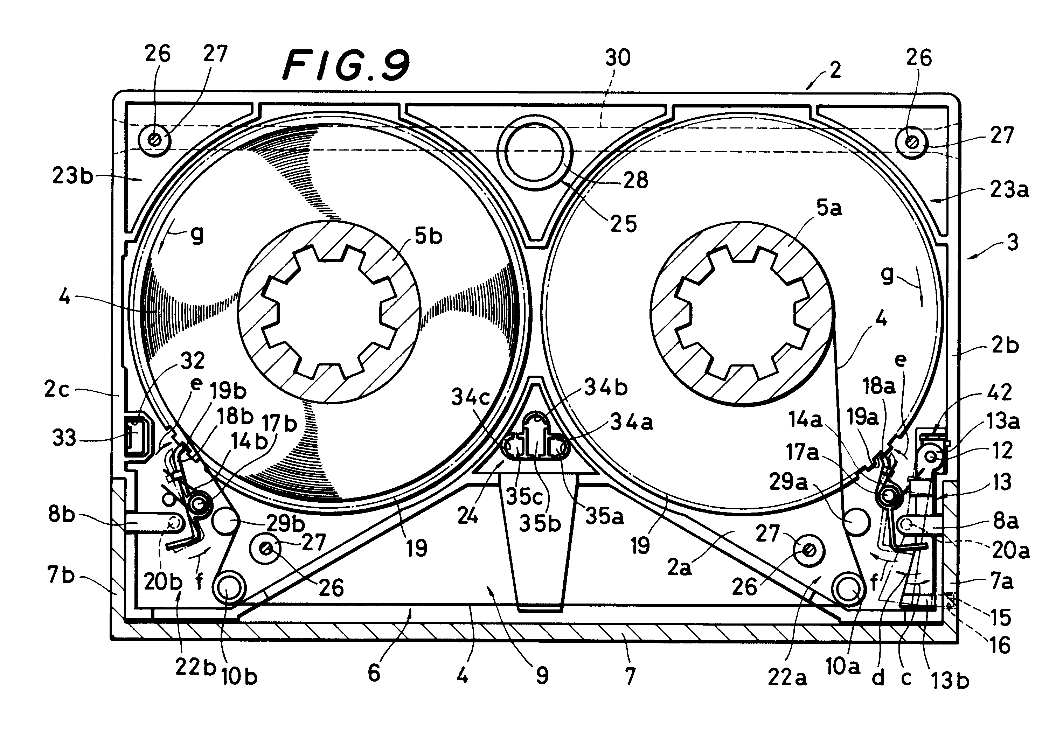

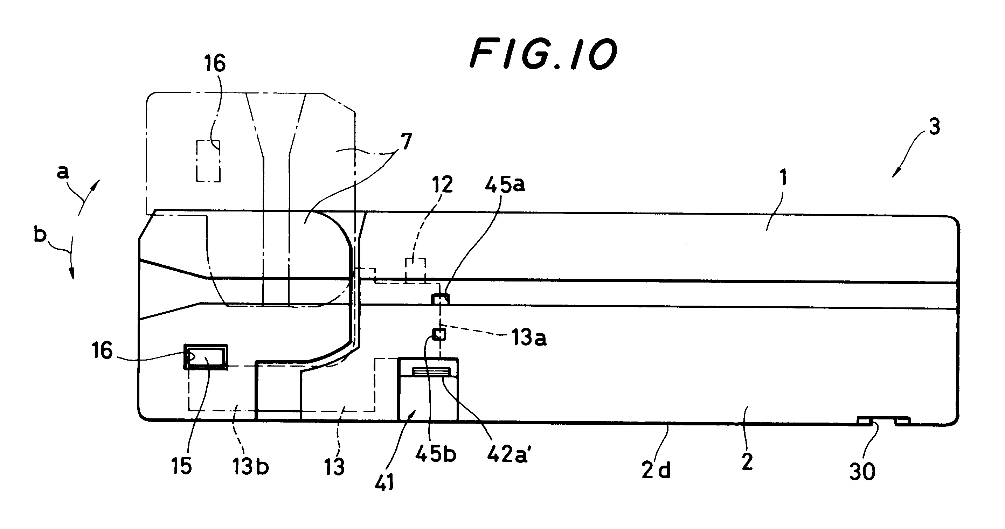

Referring to the drawings a tape cassette shown is for a video tape recorder of Beta-type. Figures 9 and 10 show that the tape cassette comprises an upper half 1 and a lower half 2 and is moulded from synthetic resin. Accommodated in the tape cassette is a pair of right and left reels 5a and 5b, around which a magnetic tape 4 is wound.

A lid 7 covering a front opening 6 provided in a body 3 of the tape cassette has a substantially channel-shaped section and is also moulded from synthetic resin. The lid 7 is secured to the cassette body 3 with a pair of right and left pivots 8a and 8b which are formed integrally with respective right and left end portions 7a and 7b of the lid 7, and is swingable in the direction indicated by arrows a and b in Figure 10.

On the front side (the lower side as viewed in Figure 9) of a bottom plate 2a of the lower half 2, a substantially trapezoidally-shaped bottom opening 9 is provided in succession to the front opening 6, and the tape 4 is guided by a pair of right and left tape guides 10a and 10b disposed on the bottom plate 2a near gateways for the tape 4, and is spanned over the bottom opening 9 along the front opening 6.

A lid-locking member 13 is mounted on a mounting pin 12 which projects perpendicular to the bottom plate 2a within the cassette body 3, and pivots on a rear portion 13a of the member 13 in the direction indicated by arrows c and d in Figure 9. Further, the lid-locking member 13 is urged in the direction indicated by the arrow c by a spring 14a, and a lock-pin 15 formed integrally with the member 13 at a front portion 13b thereof, passes through a side plate 2b of the lower half 2. The lock-pin 15 is engaged with a lock-hole 16 disposed in the lid 7 so as to make the lid 7 lock in its closed position, which closed position is indicated in solid lines in Figure 10.

When the tape cassette is mounted in a video tape recorder, and thereby, the lid-locking member 13 is swung against the force of the spring 14a by an unlocking member (not shown) in the direction indicated by arrow d in Figure 9 from the position indicated in solid lines to an unloaded position indicated in chain-dotted lines, the lock-pin 15 is moved in the direction indicated by arrow d and the lid 7 is unlocked, so that the lid 7 is swung in the direction indicated by arrow a in Figure 10 from the closed position indicated in solid lines to the opened position indicated in chain-dotted lines.

As shown in Figure 9, a pair of right and left reel-locking members 18a and 18b are mounted on respective mounting pins 17a and 17b which project perpendicular to the bottom plate 2a of the lower half 2 within the cassette body 3, and are swingable in the direction indicated by arrow e. The reel-locking members 18a and 18b are urged in the direction of arrow e by the spring 14a and a spring 14b which respectively surround the mounting pins 17a and 17b, and engage toothed portions 19a and 19b provided on the outer peripheries of lower flanges of the pair of right and left reels 5a and 5b, respectively, to prevent the reels 5a and 5b from rotating in the direction indicated by arrow g in Figure 9, that is, in a direction for paying out the tape 4.

When the tape cassette is mounted in a video tape recorder and the lid 7 is swung in the direction of arrow a in Figure 10, unlocking pins 20a and 20b, formed integrally with the pivots 8a and 8b and extending downward from the top portions of the pivots 8a and 8b as shown in Figure 9, move the reel-locking members 18a and 18b in the direction indicated by arrow f against the forces of the springs 14a and 14b from the locking position indicated in solid lines to the unlocking position indicated in chain-dotted lines in Figure 9, respectively, whereby the reels 5a and 5b are unlocked.

In the bottom plate 2a of the lower half 2 around the pair of reels 5a and 5b, there only exists a pair of right and left front corner spaces 22a and 22b, a pair of right and left rear corner spaces 23a and 23b, a front interreel space 24 located on the rear side of the central portion of the bottom opening 9 and a rear inter-reel space 25 located in the rear of the front inter-reel space 24. In each of the four corner spaces 22a, 22b, 23a and 23b, there is a boss 27 which is formed integrally with the bottom plate 2a and into which a respective screw 26 is inserted to fasten the upper half 1 to the lower half 2. In the rear-inter-reel space 25, there is a boss which is formed integrally with the bottom plate 2a and into which a corresponding boss provided in the upper half 1 is fitted. Further, in the front corner space 22a and 22b, there are the tape guides 10a and 10b, the mounting pins 17a and 17b, the reel-locking members 18a and 18b and a pair of intermediate tape guides 29a and 29b, respectively. In addition, in the right front corner space 22a, there are the mounting pin 12 and the lid-locking member 13.

As shown in Figure 9, a lateral groove 30 passing under the rear right and left bosses 27 is disposed in the bottom face 2d of the lower half 2, so that detecting apertures with respective obstruction members for retrieving information on the tape cassette and the tape 4 therein, cannot be disposed in the rear corner spaces 23a and 23b and in the rear inter-reel space 25.

A detecting aperture for retrieving information and a obstruction member breakable to open the detecting aperture, for example, a detecting aperture 32 and an obstruction member 33 for preventing erroneous errasion are disposed near a side plate 2c of the lower half 2 in the front corner space 22b (that is to say on the side where the lid-locking member 13 is not disposed) as shown in Figure 9. A plurality of detecting apertures 34a, 34b and 34c with respective breakable obstruction members 35a, 35b and 35c are disposed in the front inter-reel space 24 as shown in Figure 9.

Another detecting aperture with a cooperating obstruction member to accommodate a current tendency to variegate the kind of tape for example, or for preventing erroneous erasion, is disposed in the front corner space 22a under the mounting pin 12 for the lid-locking member 13, in other words, in a position of substantial axial symmetry with the detecting aperture 32 and the obstruction member 33.

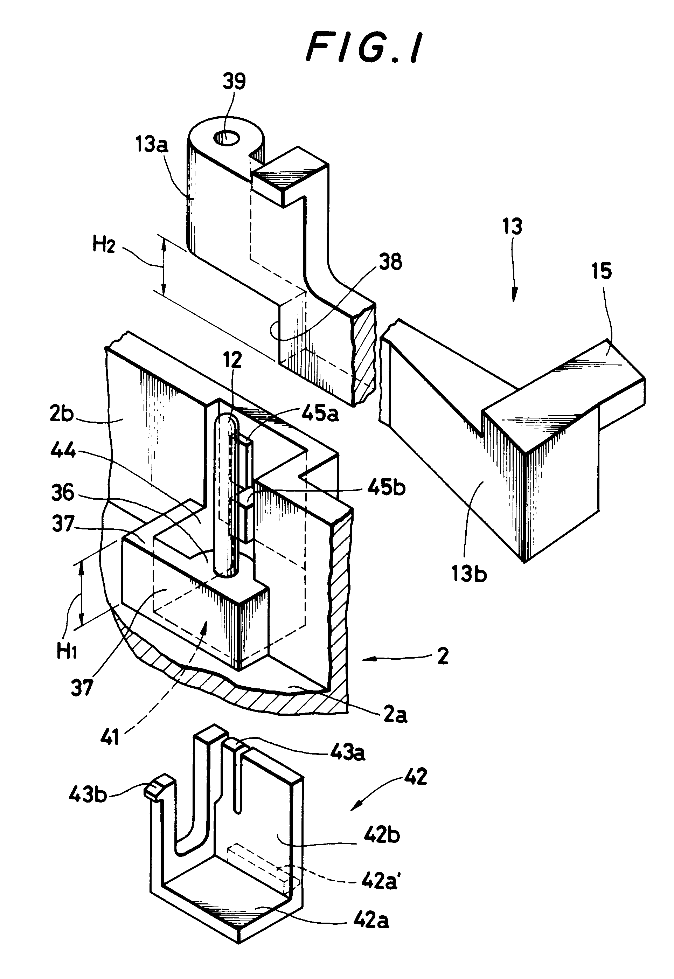

Now, a first embodiment of the invention will be described hereinafter with reference to Figures 1 to 4.

A pedestal 36 is spaced a determined height $H_1$ from the bottom plate 2a of the lower half 2 on and by an upright portion 37 which connects the pedestal 36 to the bottom plate 2a with the pedestal 36 and the upright portion 37 being formed integrally with the bottom plate 2a and with the mounting pin 12 which projects perpendicularly upwardly from the pedestal 36.

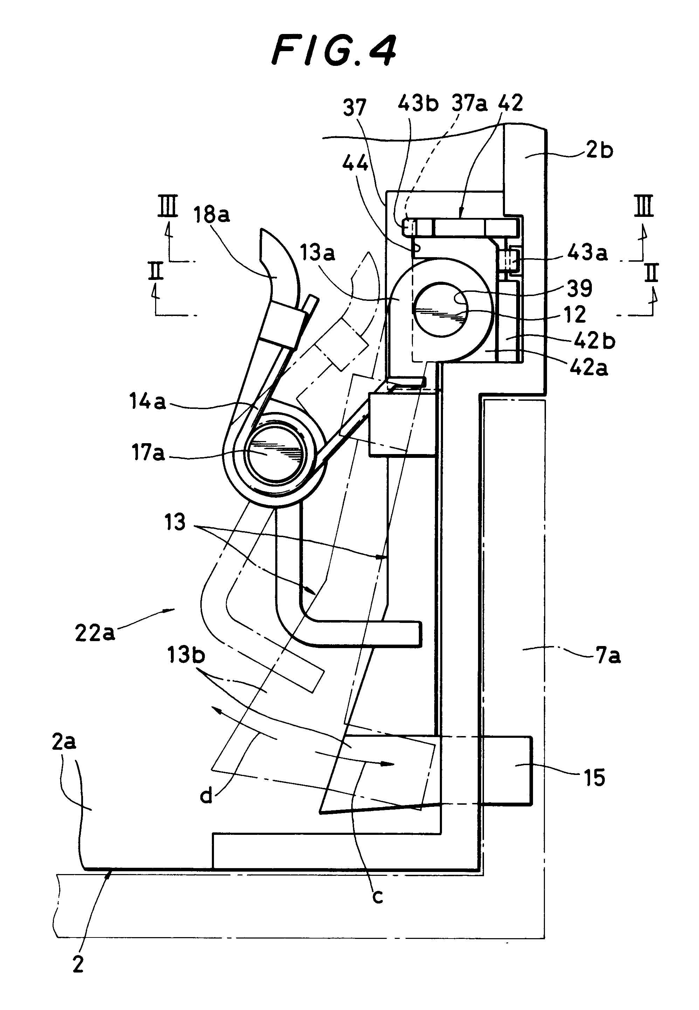

A stepped portion 38 of height $H_2$, which is substantially the same as the height $H_1$, is provided on the lower part of the rear portion 13a of the lid-locking member 13. Thus, the lid-locking member 13 is swingable in the direction indicated by arrows c and d in Figure 4, when the mounting pin 12 is fitted into a hole 39 provided in the rear portion 13a of the member 13. Further, the top of the mounting pin 12 is fitted into a hollowed boss 40 provided in a top plate 1a of the upper half 1 whereby the mounting pin 12 is firmly supported.

By utilizing a space of height $H_3$ under the pedestal 36, a rectangular detecting aperture 41 is disposed in a bottom face 2d of the lower half 2, and it is also open through a side face 2e of the lower half 2. Further, an obstruction member 42 closing the mouth of the detecting aperture 41 from the bottom face 2d to the side face 2e is fitted in the detecting aperture 41.

The obstruction member 42 comprises a horizontal plate 42a for closing a horizontal portion of the mouth of the detecting aperture 41 in the bottom face 2d, a vertical plate 42b for closing a vertical portion of the mouth of the detecting aperture 41 in the side face 2e, and a pair of resilient positioning projections 43a and 43b, all of which are integrally moulded from synthetic resin.

The obstruction member 42 can move up and down in the detecting aperture 41, and the vertical plate 42b and the positioning projections 43a and 43b are inserted in a substantially L-shaped slot 44 from beneath the slot 44. The positioning projection 43a is selectively engaged in one or other of a pair of upper and lower positioning recesses 45a and 45b which are provided in the inner face of the side plate 2b of the lower half 2.

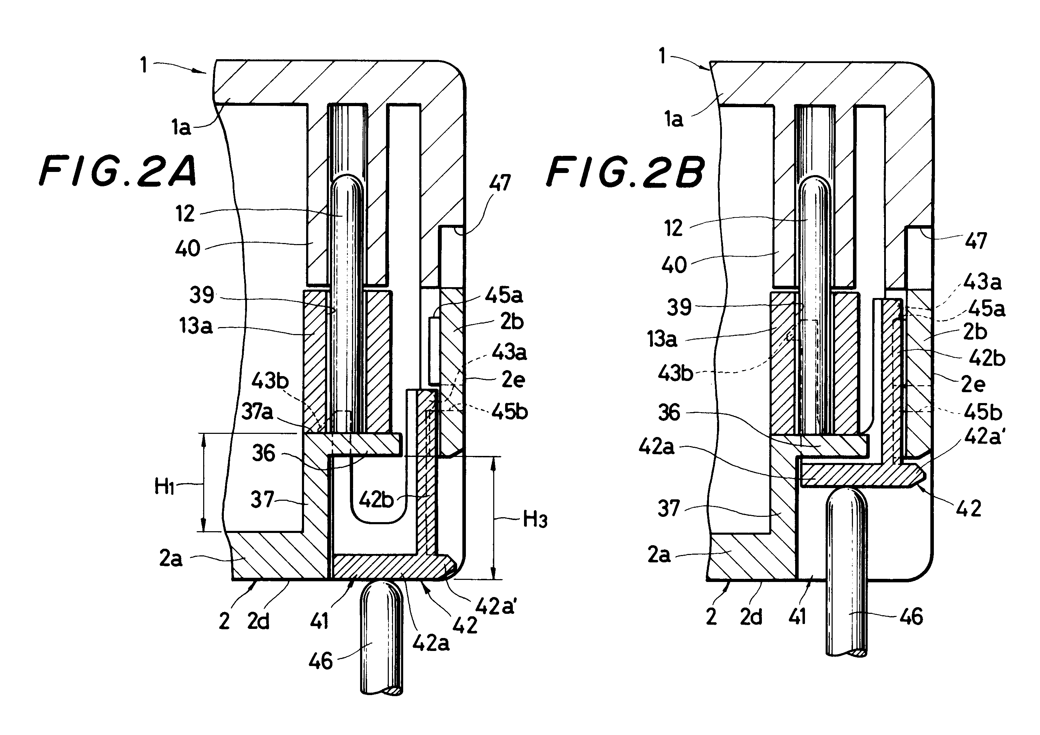

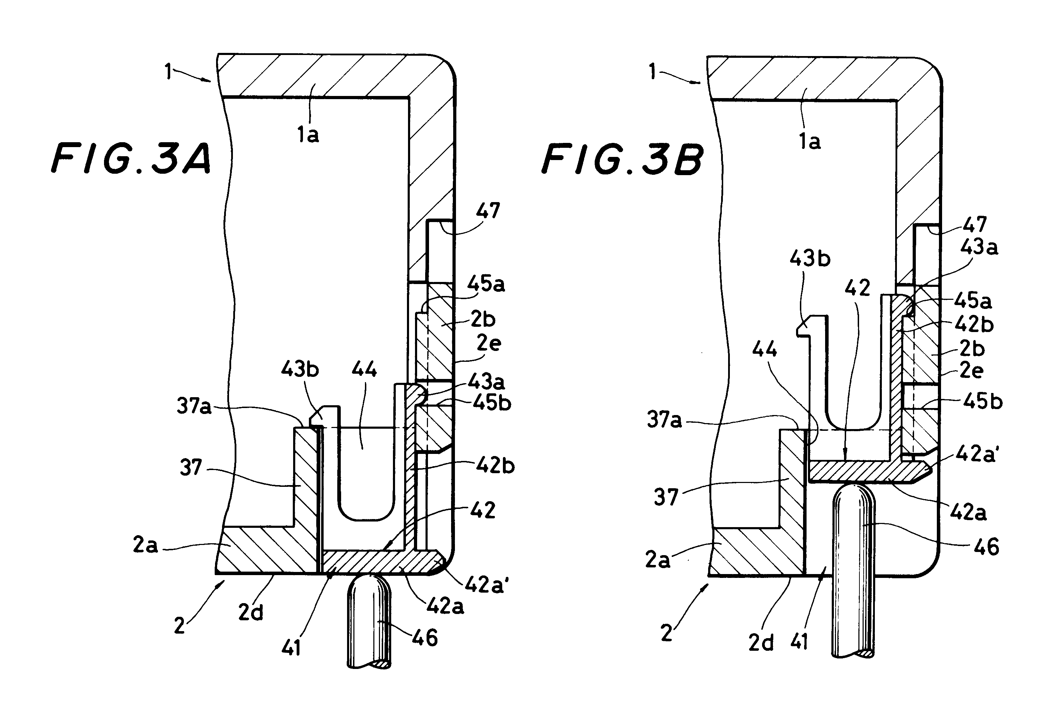

When the obstruction member 42 is in its lower position as shown in Figures 2A and 3A, the mouth of the detecting aperture 41 in the bottom plate 2a and the side plate 2b is closed by the horizontal plate 42a and the vertical plate 42b. In this position the positioning projection 43a is resiliently engaged with the lower positioning recess 45b, and the positioning projection 43b engages the top face 37a of the upright position 37 of the bottom plate 2a. The obstruction member 42 is thus located in its determined lower position. The obstruction member 42 can be lowered to this position by catching a distal end $42a^1$ of the horizontal plate 42 with a finger nail.

When the tape cassette is mounted in a video tape recorder in the above state, that is to say with the detecting aperture 41 closed by the obstruction member 42, a detecting pin 46 provided in the video tape recorder is resiliently pressed down by the horizontal plate 42a of the obstruction member 42, so that the detecting aperture 41 is closed, is retrieved. If, as shown in Figures 2B and 3B, the obstuction member 42 is raised to its upper position, the mouth of the detecting aperture 41 in the bottom plate 2a and the side plate 2b is simultaneously opened. In this position, the positioning projection 43a, after being disengaged from the lower positioning recess 45b, is resiliently engaged in the upper positioning recess 45a, and the obstruction member 42 is located in its upper position. The obstruction member 42 can be raised tot he upper position by pushing upwardly on the horizontal plate 42a.

When the tape cassette is mounted in the video tape recorder with the detecting aperture 41 open, the detecting pin 46 engages in the detecting aperture 41, and the information that the detecting aperture 41 is open, is retrieved. Since the vertical portion of the mouth of the detecting aperture 41 in the side plate 2b is also open, the detecting pin 46 can fit into the detecting aperture 41 in the radial direction thereof so as to retrieve information as mentioned above. A horizontal guide groove 47 can be provided in the side face 2e of the cassette body 3 as shown in Figures 2A and 3B.

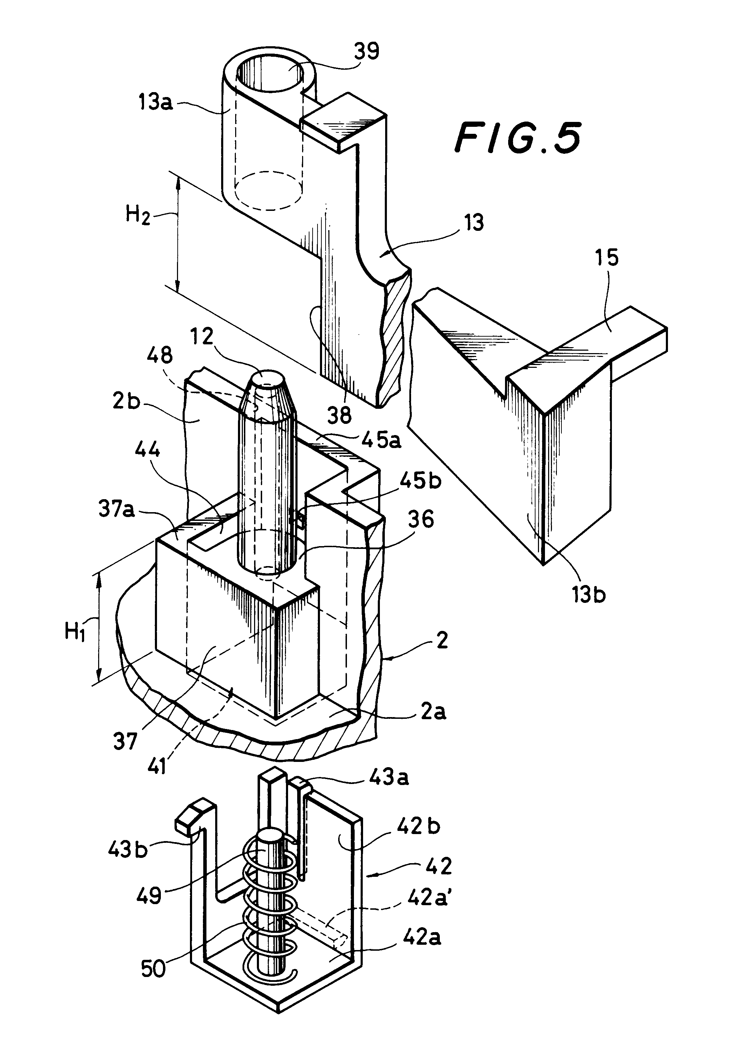

Referring to Figures 5 to 6B wherein a second embodiment of the invention is shown, a guide bore 48 extends through the pedestal 36 and along the axis of the mounting pin 12 in the central part thereof. The mounting pin 12 is formed integrally with the pedestal 36 and vertically projects from the top of the pedestal 36 as described in the first embodiment. A guide pin 49 is formed integrally with the obstruction member 42 and projects vertically from the top of the horizontal plate 42a of the obstruction member 42 in the substantially central part thereof. The guide pin 49 is inserted into the guide bore 48 and a spring 50, for biassing the obstruction plate 42 downwardly from its upper position to its lower position, surrounds the guide pin 49 and lies between the pedestal 36 and the horizontal plate 42a.

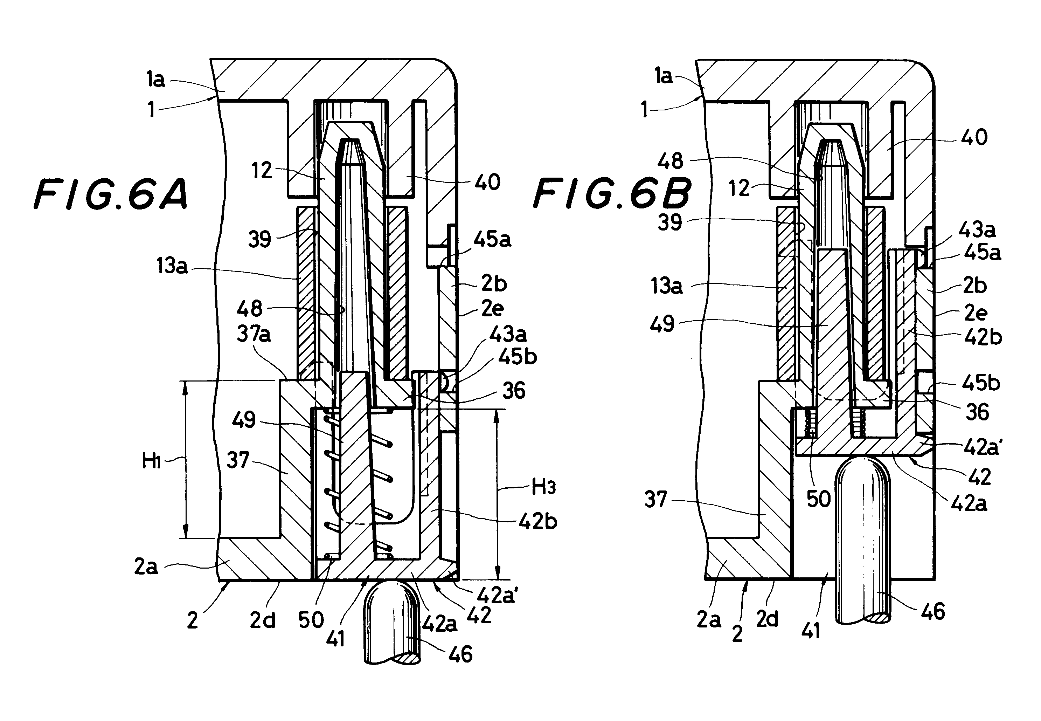

Thus, when the obstruction member 42 is lowered to its lower position as shown in Figure 6A, the mouth of the detecting aperture 41 in the bottom plate 2a and the side plate 2b is closed by the horizontal plate 42a and the vertical 42b. At the same time, the positioning projection 43a resiliently engages with the lower positioning recess 45b, and the positioning projection 43b engages the top face 37a of the upright projection 37 of the bottom plate 2a. Further, the obstruction member 42 is pressed down by the force of the spring 50. Hence, the obstruction member 42 is firmly positioned in its lower position, and the obstruction member 42 can be moved to its lower position by only lowering it a little by catching the distal end 42a¹ of the horizontal plate 42a with a finger nail, becase the spring 50 thereafter pressed the obstruction member 42 down to its lowered position.

When the tape cassette is mounted in a video tape recorder with the detecting aperture 41 closed by the obstruction member 42, the detecting pin 46 in the video tape recorder is resiliently pressed down by the horizontal plate 42a of the obstruction member 42, so that the information that the detecting aperture 41 is closed, is retrieved. As the obstruction member 42 is, at the time, firmly positioned in its lower position by the force of the spring 50, it will not occur that the obstruction member 42 is pushed up by the detecting pin 46, the positioning projection 43a is disengaged from the positioning recess 45b, and the obstruction member 42 unexpectedly raised. Thus, the obstruction member 42 will always firmly press down the detecting pin 46 against the elastic force.

If the obstruction member 42 is raised to its upper position against the bias of the spring 50 as shown in Figure 6B, the mouth of the detecting aperture 41 in the bottom plate 2a and the side plate 2b is simultaneously opened. At the time, the positioning projection 43a is disengaged from the lower positioning recess 45b and resiliently engaged with the upper positioning recess 45a, so that the obstruction member 42 is located in its upper position. The obstruction member 42 can be raised to its upper position by pushing up the horizontal plate 42a.

When the tape cassette is mounted in the video tape recorder in the above condition, that is to say with the detecting aperture 41 open, the detecting pin 46 which is not to be pressed down engages in the detecting aperture 41, so that the information that the detecting aperture 41 is open, is retrieved. The obstruction member 42 can smoothly move up and down since the guide pin 49 is guided by the guide bore 48.

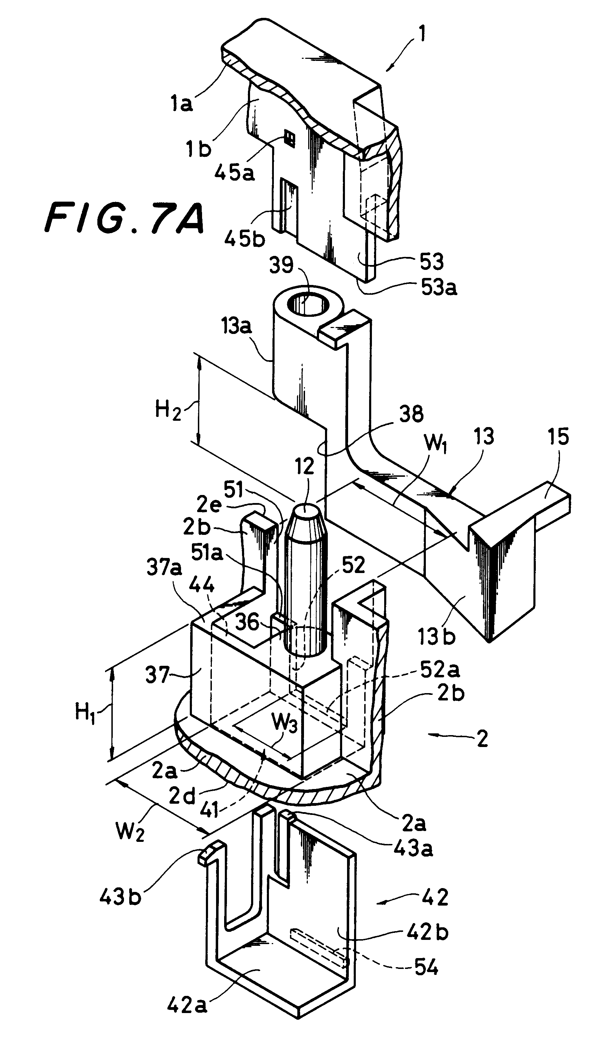

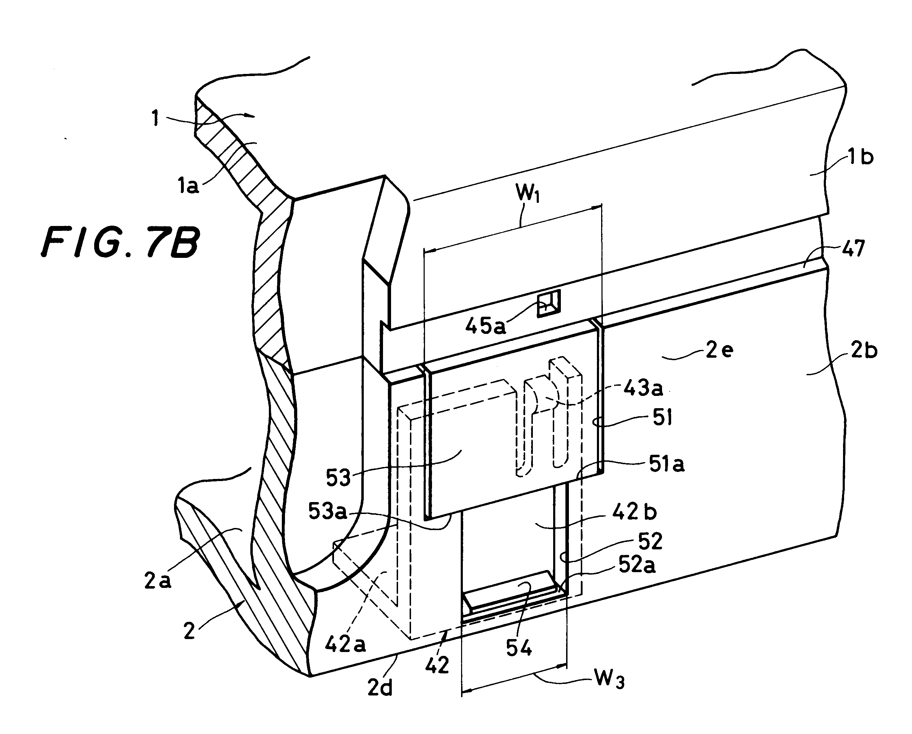

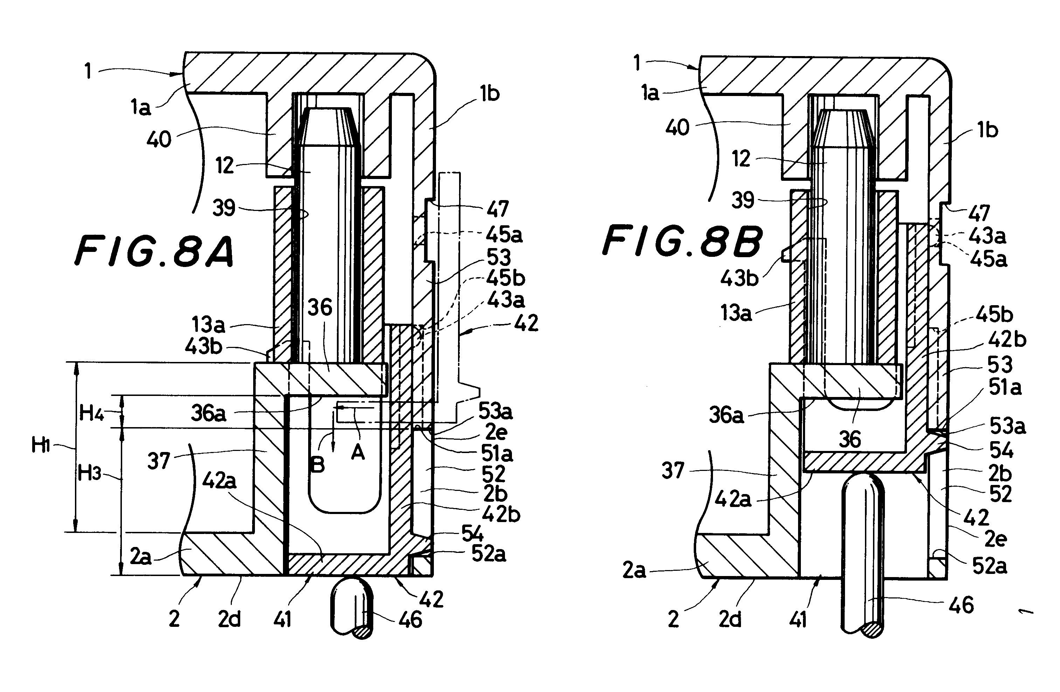

In a third embodiment of the invention described with reference to Figures 7A to 8B, a first U-shaped notch 51 is provided in the upper edge of the side plate 2b of the lower half 2 and a second U-shaped notch 52 is provided in the flat bottom of the first U-shaped notch 51. The second notch 52 communicates with the detecting aperture 41 at a side thereof. Further, the width $W_1$ of the first notch 51 is substantially equal to the width $W_2$ of the detecting aperture 41.

A pair of steps 51a, two parts of the flat bottom of the first notch 51, which are separated by the second notch 52, are lower in height $H_4$ than a lower face 36a of the pedestal 36, and a projection 53 formed integrally with the upper half 1 and projecting downwards from a side plate 1b of the upper half 1, is fitted into the first notch 51. A lower edge 53a of the projection 53 abuts against the steps 51a, so that the open side of the second U-shaped notch 52 is closed by the lower edge 53a.

A stop 54 comprising a horizontally elongate projection is formed integrally with the obstruction member 42 at the outer lower side of the vertical plate 42b thereof, and the stop 54 is fitted in the second notch 52 so as to be movable up and down between the lower edge 53a of the projection 53 of the upper half 1 and a flat bottom 52a of the second notch 52 of the lower half 2.

The obstruction member 42 is fitted into the detecting aperture 41 before the upper half 1 and the lower half 2 are connected. That is, the horizontal plate 42a of the obstruction member 42 is horizontally inserted into the detecting aperture 41 in the direction of arrow A as indicated in chain-dotted lines in Figure 8A through the gap of height $H_4$ so as to make the vertical plate 42b fit in the inner side of the side plate 2b of the lower half 2, and then, the obstruction member 42 is vertically lowered in the direction of arrow B as indicated in solid lines in Figure 8A so as to make the stop 45 fit in the second notch 52. After the stop 54 has abutted the bottom 52a of the second notch 52, the upper half 1 and the lower half 2 are connected and fastened with screws. As the result, the projection 53 of the upper half 1 is neatly fitted in the first notch 51 and the obstruction member 42 becomes movable up and down within the detecting aperture 41.

Thus, when the obstruction member 42 is lowered to the lower position as shown in Figure 8A, the mouth of the detecting aperture 41 in the bottom plate 2a and the side plate 2b is closed by the horizontal plate 42a and the vertical plate 42b. The positioning projection 43a is resiliently engaged with the lower positioning recess 45b, and the positioning projection 43b and the stop 54 are engaged with the top face 37a of the upright projection 37 and the bottom 52a of the second notch 52, respectively. Hence, the obstruction member 42 is firmly positioned in its lower position. The obstruction member 42 can be lowered by engaging the stop 54 with a finger nail.

When the tape cassette is mounted in a video tape recorder in the state that the detecting hole 41 is closed by the obstruction member 42, the detecting pin 46 of the video tape recorder is resiliently pressed down by the horizontal plate 42a of the obstruction member 42, so that the information that the detecting aperture 41 is closed, is retrieved.

If the obstruction member 42 is raised to its upper position as shown in Figure 8B, the mouth of the detecting aperture 41, the horizontal portion of which is in the bottom plate 2a and the vertical portion of which is the second notch 52 communicating with the detecting aperture 41, is simultaneously opened. At the same time, the positioning projection 43a is disengaged from the lower positioning recess 45b, and resiliently engages with the upper positioning recess 45a, and the stop 54 is engaged with the lower edge 53a of the projection 53, so that the obstruction member 42 is firmly located in its upper position. The obstruction member 42 can be raised to the upper position by pushing up the horizontal plate 42a.

When the tape cassette is mounted in a video tape recorder in the state that the detecting aperture 41 is open, the detecting pin 46 which is not to be pressed down, engages in the detecting aperture 41 and the information that the detecting aperture 41 is open, is retrieved.

In the third embodiment, even if the obstruction member 42 when located in its upper position should forcibly be lowered, the obstruction member 42 might be prevented from lowering further after the stop 54 comes into contact with the bottom 52a of the second notch 52 as shown in Figure 8A. Therefore, the covering member 42 never comes off the detecting aperture 41 after the upper half 1 and the lower half 2 are fastened to each other.

**Claims**

1.  A tape cassette having an upper half (1) and a lower half (2) and accommodating a pair of reels (5a, 5b) around which a tape (4) is wound, the tape cassette comprising:

    a lid (7) to close a front opening (6) within which the tape (4) extends and;

    a lid-locking member (13) pivoted on a mounting pin (12) and to lock the lid (7);

    characterised in that a pedestal (36) is provided on a bottom wall (2a) of the cassette, which pedestal (36) has a raised portion which is at a higher level than the bottom wall (2a) and defines a cavity beneath the raised portion;

    the mounting pin (12) projects upwardly from the raised portion of the pedestal (36); and

    a detecting aperture (41) is provided in the lower half opening into the cavity beneath the pedestal (36) and an obstruction member (42) is movable within the cavity to provide an indication of information regarding the tape cassette depending on whether or not it obstructs the detecting aperture (41).

2.  A tape cassette according to claims 1, wherein the obstruction member (42) can be moved up and down to open or close the detecting aperture (41).

3.  A tape cassette according to claim 2, wherein the obstruction member (42) includes a retaining mechanism (43a, 45a, 45b) for retaining the obstruction member (42) in the position in which the detecting aperture (41) is open or the position in which it is closed.

4. A tape cassette according to claim 3, including a downwardly open guide bore (48) formed in the mounting pin (12), and a guide pin (49) engaged in the guide bore (48) to guide up-and-down movement of the obstruction member (42).

5. A tape cassette according to claim 4, including means (50) resiliently biassing the obstruction member (42) downwardly toward the position where the detecting aperture (41) is closed.

6. A tape cassette according to claim 2, including a stop (54) disposed on the obstruction member near the detecting aperture (41) to contact the closed bottom (52a) of a notch (52) provided in the lower half (2) so that the up-and-down movement of the obstruction member (42) may be guided thereby, to prevent the obstruction member (42) from disengaging from the detecting aperture (41) when the obstruction member (42) is moved to the position in which the detecting aperture (41) is closed.

## Revendications

1. Cassette à bande ayant une moitié supérieure (1) et une moitié inférieure (2) et recevant une paire de bobines (5a, 5b) sur lesquelles est enroulée une bande (4), la cassette à bande comportant :

un volet (7) destiné à fermer une ouverture avant (6) dans laquelle s'étend la bande (4) et;

un élément de verrouillage de volet (13) pivotant sur un axe de montage (12) et destiné à verrouiller le volet (7);

caractérisé en ce qu'un support (36) est prévu sur une paroi inférieure (2a) de la cassette, lequel support (36) possède une partie relevée qui est à un niveau plus élevé que la paroi inférieure (2a) et définit une cavité sous la partie relevée;

l'axe de montage (12) dépasse vers le haut depuis la partie relevée du support (36); et

une ouverture de détection (41) est prévue dans l'ouverture de moitié inférieure dans la cavité sous le support (36) et un élément d'obturation (42) est mobile dans la cavité afin de fournir une indication d'information se rapportant à la cassette à bande en fonction du fait qu'il obture ou non l'ouverture de détection (41).

2. Cassette à bande selon la revendication 1, dans laquelle l'élément d'obturation (42) peut être déplacé vers le haut et vers le bas afin d'ouvrir ou fermer l'ouverture de détection (41).

3. Cassette à bande selon la revendication 2, dans laquelle l'élément d'obturation (42) comporte un mécanisme de retenue (43a, 45a, 45b) destiné à retenir l'élément d'obturation (42) dans la position dans laquelle l'ouverture de détection (41) est ouverte ou dans la position dans laquelle elle est fermée

4. Cassette à bande selon la revendication 3, comprenant un trou de guidage ouvert vers le bas (48) formé dans l'axe de montage (12), et un axe de guidage (49) engagé dans le trou de guidage (48) afin de guider un déplacement vers le haut et vers le bas de l'élément d'obturation (42).

5. Cassette à bande selon la revendication 4, comprenant des moyens (50) rappelant élastiquement l'élément d'obturation (42) vers le bas en direction de la position dans laquelle l'ouverture de détection (41) est fermée.

6. Cassette à bande selon la revendication 2, comprenant une butée (54) disposée sur l'élément d'obturation à proximité de l'ouverture de détection (41) afin d'entrer en contact avec le fond fermé (52a) d'une encoche (52) prévue dans la moitié inférieure (2) de telle sorte que le déplacement vers le haut et vers le bas de l'élément d'obturation (42) peut être guidé, afin d'empêcher l'élément d'obturation (42) de se désengager de l'ouverture de détection (41) lorsque l'élément d'obturation (42) est déplacé vers la position dans laquelle l'ouverture de détection (41) est fermée.

## Patentansprüche

1. Eine Bandkassette, die eine obere Hälfte (1) und eine untere Hälfte (2) aufweist und ein Paar Spulen (5a,5b) aufnimmt, um die ein Band (4) gewickelt ist, wobei die Bandkassette umfaßt:

einen Deckel (7) zum Verschließen einer vorderen Öffnung (6), innerhalb welcher das Band (4) verläuft und;

ein Deckel-Arretierelement (13), das an einem Halterungsstift (12) schwenkbar gelagert und zum Arretieren des Deckels (7) vorgesehen ist;

dadurch gekennzeichnet, daß ein Sockel (36) an einer Bodenwandung (2a) der Kassette vorgesehen ist, welcher Sockel (36) einen erhöhten Teil aufweist, der sich auf einem höheren Niveau als die Bodenwandung (2a) befindet und einen Hohlraum unterhalb des erhöhten Teils begrenzt;

der Halterungsstift (12) vom erhöhten Teil des Sockels (36) aus nach oben ragt; und

in der unteren Hälfte eine Anzeigeöffnung (41) vorgesehen ist, die sich zum Hohlraum unterhalb des Sockels (36) öffnet, und ein Sperrelement (42) innerhalb des Hohlraumes bewegbar ist, um einen Hinweis auf eine die Bandkassette betreffende Information in Abhängigkeit davon zu geben, ob es die Anzeigeöffnung (41) versperrt oder nicht.

2. Eine Bandkassette nach Anspruch 1, in welcher das Sperrelement (42) aufwärts und abwärts bewegt werden kann, um die Anzeigeöffnung (41) zu öffnen oder zu schließen.

3. Eine Bandkassette nach Anspruch 2, in welcher das Sperrelement (42) einen Haltemechanismus (43a,45a,45b) aufweist zum Halten des Sperrelementes (42) in der Stellung, in der die Anzeigeöffnung (41) offen ist, oder der Stellung, in der sie verschlossen ist.

4. Eine Bandkassette nach Anspruch 3, mit einer im Halterungsstift (12) ausgebildeten, nach unten offenen Führungsbohrung (48) und einem mit der Führungsbohrung (48) im Eingriff befindlichen Führungsstift (49) zur Führung der Aufwärts- und Abwärtsbewegung des Sperrelementes (42).

5. Eine Bandkassette nach Anspruch 4, mit einer Einrichtung (50), die das Sperrelement (42) elastisch nach unten in Richtung der Stellung beaufschlagt, in der die Anzeigeöffnung (41) geschlossen ist.

6. Eine Bandkassette nach Anspruch 2, mit einem am Sperrelement nahe der Anzeigeöffnung (41) angeordneten Anschlag (54) zum Berühren des geschlossenen Bodens (52a) einer in der unteren Hälfte (2) vorgesehenen Aussparung (52), so daß dadurch die Aufwärts- und Abwärtsbewegung des Sperrelementes (42) geführt werden kann, um zu verhindern, daß das Sperrelement (42) sich aus dem Eingriff mit der Anzeigeöffnung (41) löst, wenn das Sperrelement (42) in die Stellung bewegt wird, in der die Anzeigeöffnung (41) verschlossen ist.

# FIG.1

FIG.2A

FIG.2B

EP 0 260 000 B1

FIG.3A

FIG.3B

EP 0 260 000 B1

# FIG.4

FIG.5

*FIG.6A*

*FIG.6B*

EP 0 260 000 B1

FIG.7A

FIG. 7B

EP 0 260 000 B1

**FIG.8A**

**FIG.8B**

EP 0 260 000 B1

FIG.9

# FIG.10

EP 0 260 000 B1